# EUROPÄISCHE PATENTSCHRIFT

(11) **EP 1 238 844 B1**
(45) Veröffentlichungstag und Bekanntmachung des Hinweises auf die Patenterteilung: **27.04.2005**
(21) Anmeldenummer: 02003019.3
(22) Anmeldetag: 12.02.2002
(51) Int. Cl.: B60K 15/01, F16L 55/033, B60T 17/04, B62D 25/20

(54) **Anordnung zur Halterung einer Kraftstoffleitung an einem Kraftfahrzeug**
Fuel conduit supporting arrangement in motor vehicle
Dispositif pour le support d'un conduit de carburant dans un véhicule automobile

(30) Priorität: 07.03.2001 DE 10110763
(43) Veröffentlichungstag der Anmeldung: 11.09.2002
(73) Patentinhaber: Bayerische Motoren Werke Aktiengesellschaft, 80809 München (DE)
(72) Erfinder: Veitl, Franz, 85417 Marzling (DE); Wittenstein, Holger, 81539 München (DE)

(56) Entgegenhaltungen:
- EP-A- 0 638 756
- EP-A- 1 250 254
- DE-A- 3 028 998
- DE-A- 4 141 689
- DE-A- 10 001 224
- DE-C- 3 602 625
- US-A- 4 518 196

## Beschreibung

Die Erfindung betrifft eine Anordnung zur Halterung zumindest einer als Kraftstoffleitung fungierenden Leitung an einem Kraftfahrzeug, bestehend aus einem die Leitung umgebenden elastischen Dämpfungselement, das zwischen einem Bodenblech des Kraftfahrzeugs und einem hiervon beabstandeten flächigen Bauelement, welches wesentlich größer als Dämpfungselement ist, angeordnet ist. Zum technischen Umfeld wird neben der DE 36 02 625 C1 oder der DE 30 28 998 C2 auf die gattungsbildende DE 41 41 689 A1 verwiesen.

Kraftstoffleitungen verlaufen am Unterboden eines Kraftfahrzeuges, insbesondere Personenkraftwagens, vom im Fzg.-Heckbereich angeordneten Kraftstofftank zur im Fzg.-Frontbereich eingebauten Antriebs-Brennkraftmaschine. Dabei müssen die Kraftstoffleitungen bzw. allgemein die parallel zum Fahrzeug-Unterboden verlaufenden und an diesem angeordneten Leitungen zunächst ausreichend fest bzw. stabil am Unterboden gehalten sein, andererseits jedoch bestehen auch nicht vemachlässigbare Anforderungen bezüglich akustischer, allgemein schwingungstechnischer Isolation. Diese Anforderungen können grundsätzlich mit elastischen Dämpfungselementen, unter Zwischenschaltung derer die Kraftstoffleitung am Fzg.-Bodenblech befestigt sind, erfüllt werden.

Allerdings ist die Montage insbesondere einer Mehrzahl derartiger Dämpfungselemente relativ aufwendig, wenn für diese gemäß dem bekannten Stand der Technik jeweils eigene Befestigungselemente benötigt werden, und darüber hinaus können separate Isolationsmaßnahmen zwischen den genannten Dämpfungselement-Befestigungselementen und dem Fzg.-Bodenblech erforderlich werden, was den Aufwand weiter erhöht. Dies gilt in besonderem Maße für den Stand der Technik nach der DE 41 41 689 A1, der ein eigenständiges Kunststoffgehäuse für das Dämpfungselement vorschlägt, das in einen an das Bodenblech angeschweißten Halter eingeclipst wird. Demgegenüber einfacher ist zwar eine in der WO 01/51336 gezeigte Lösung für eine Abgasanlage eines Kraftfahrzeugs, jedoch ist diese Schrift nicht vorveröffentlicht und betrifft einen anderen Gegenstand als die vorliegende Erfindung.

Eine Abhilfemaßnahme für die geschilderte Problematik aufzuzeigen, ist daher Aufgabe der vorliegenden Erfindung.
Die Lösung dieser Aufgabe ist dadurch gekennzeichnet, dass das Dämpfungselement zwischen dem Bodenblech und dem flächigen Bauelement eingespannt und ohne weitere Befestigungselemente gehalten ist. Vorteilhafte Weiterbildungen sind Inhalt der Unteransprüche.

Somit ist das Dämpfungselement, welches die Kraftstoffleitung umgibt, zwischen dem Fzg.-Bodenblech und einem weiteren flächigen Bauelement eingespannt, bei welchem es sich ausdrücklich nicht um eine Halteschelle oder dgl. für das Dämpfungselement handelt. Indem dieses weitere Bauelement erstens eine Fläche beschreibt und zweitens in dieser flächigen Abmessung erheblich größer als das Dämpfungselement ist, kann dieses flächige Bauelement neben der Haltefunktion für das Dämpfungselement somit weitere Funktionen übernehmen. Bspw. kann es sich bei diesem flächigen Bauelement in einer bevorzugten Ausführungsform um die ansonsten an sich übliche Unterbodenverkleidung oder um einen Bestandteil derselben handeln. In besonders vorteilhafter Weise können dabei mehrere Dämpfungselemente - geeignet angeordnet - zwischen dem Fzg.-Bodenblech und dem flächigen Bauelement angeordnet sein, es können jedoch allgemein auch weitere Bauteile an diesem flächigen Bauelement angeordnet oder befestigt sein oder werden.

Die Außenkontur des Dämpfungselementes ist geeignet gestaltet, so dass dieses bzw. jedes der ggf. mehreren Dämpfungselement(e) ohne weitere Befestigungselemente zwischen dem Bodenblech und dem (weiteren) flächigen Bauelement eingespannt werden kann, was naturgemäß die Montage erheblich vereinfacht. Geeignete Dämpfungselemente können gezielt geformt und in besonders einfacher Weise bspw. in extrutiertem Moosgummi oder dgl. gefertigt werden.

Ein Bestandteil der Kraftstoffleitung kann ein neben der Fluid-Führung eine zusätzliche Funktion aufweisendes Bauteil sein, welches ebenfalls über ein elastisches Dämpfungselement zwischen dem Bodenblech und dem flächigen Bauelement eingespannt ist. So kann bspw. eine Kraftstoffpumpe oder ein Kraftstoff-Filter in der gleichen Weise und dabei isolierend über ein Dämpfungselement gehalten werden, wenn dieses aufgrund geeigneter Formgebung ebenso zwischen dem Fzg.-Bodenblech und dem erfindungsgemäßen weiteren flächigen Bauelement eingespannt ist.

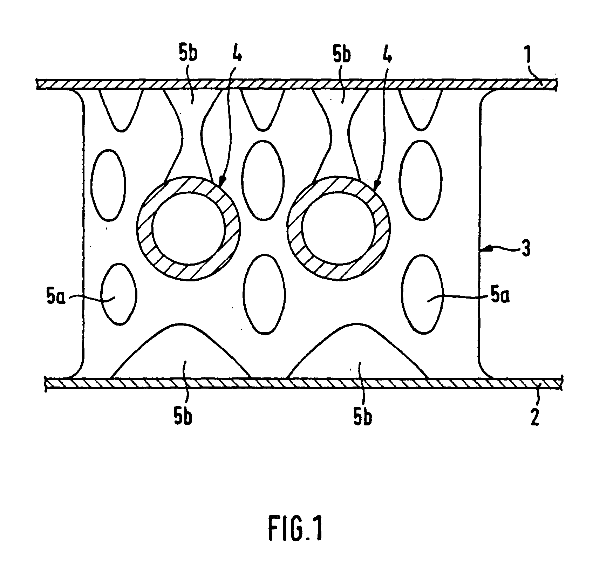

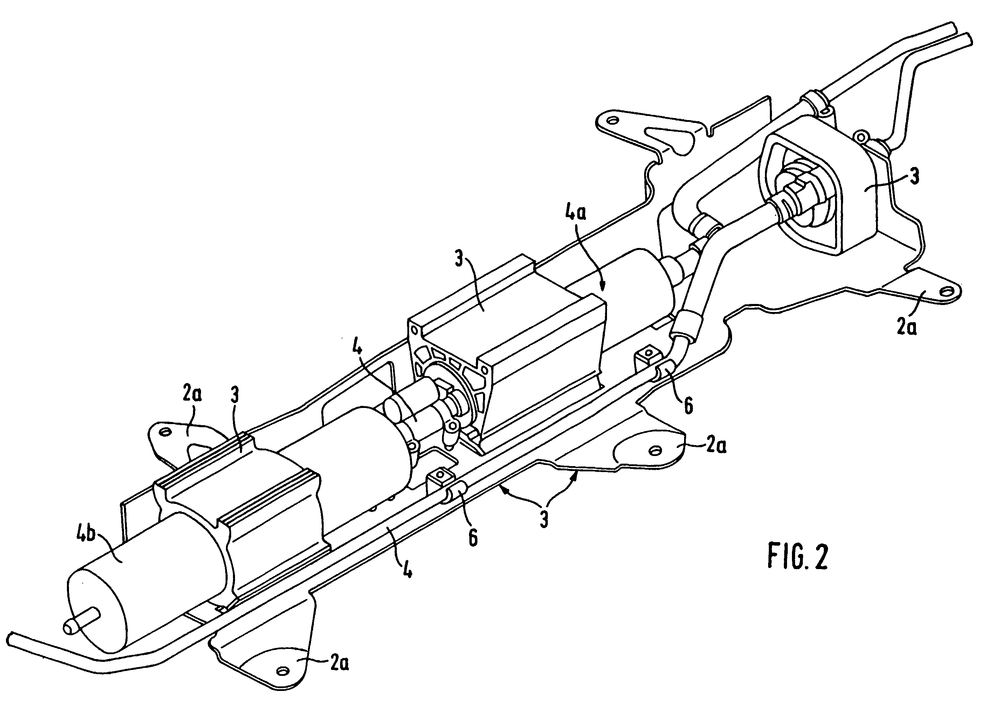

Im folgenden wird die Erfindung anhand eines bevorzugten Ausführungsbeispieles weiter erläutert, wobei die beigefügte **Figur 1** des Querschnitt durch eine erfindungsgemäße Anordnung in einer Prinzipdarstellung zeigt, während in **Figur 2** eine erfindungsgemäße Gesamt-Anordnung in 3-D-Darstellung ohne das Fzg.-Bodenblech gezeigt ist.

Bezugnehmend auf **Fig.1** ist mit der Bezugsziffer 1 das Bodenblech bzw. der sog. Unterboden eines Personenkraftwagens bezeichnet, zu dem zumindest abschnittsweise im wesentlichen parallel näher zur Fahrbahn hin eine sog. Unterbodenverkleidung angeordnet ist, die auf in Fig.1 nicht näher dargestellte Weise an geeigneter Stelle direkt oder indirekt letztlich am Bodenblech 1 befestigt ist. Diese Unterbodenverkleidung wird hier als flächiges Bauelement mit der Bezugsziffer 2 bezeichnet.

Zwischen dem Bodenblech 1 und dem flächigen Bauelement 2 ist ein elastisches Dämpfungselement 3 eingespannt, welches hier zwei voneinander beabstandet nebeneinander verlaufende Kraftstoffleitungen 4 umgibt bzw. einbettet und diese somit in günstiger schall- und schwingungsisolierender Weise in dem ohnehin vorhandenen Hohlraum oder Zwischenraum zwischen dem Bodenblech 1 und der Unterbodenverkleidung bzw. dem flächigen Bauelement 2 hält. Dabei ist dieses elastische Dämpfungselement 3 aus einem geeigneten elastomeren Werkstoff, bspw. Moosgummi oder dgl. gefertigt und erhält ferner durch die konkrete Ausgestaltung eine zusätzliche Elastizität. Wie aus Fig.1 ersichtlich wird, handelt es sich bei diesem Dämpfungselement 3 nämlich nicht um einen sog. Vollkörper, sondern es sind Unterbrechungen 5a oder Einbuchtungen 5b in der Struktur des Dämpfungselementes 3 vorgesehen, die in gewünschter Weise elastizitätserhöhend wirken und dabei die Leitungen 4 dämpfend lagern. Dabei kann - wie ersichtlich - jeweils über eine der zum Rand des Dämpfungselementes 5 hin offenen Einbuchtungen 5b eine Kraftstoff-Leitung 4 in das Dämpfungselement 3 eingesetzt werden.

In **Fig.2** ist das sog. flächige Bauelement 2, das erheblich größer als ein einzelnes Dämpfungselement 3 ist, dreidimensional dargestellt, weshalb das (bei dieser Darstellung dem Betrachter zugewandte) Bodenblech 1 des PKW's nicht gezeigt ist, um die mehreren zwischen dem Bauelement 2 sowie dem Bodenblech (1) angeordneten Dämpfungselemente 3 sowie Leitungen 4 sichtbar zu machen. In dieser Darstellung erkennt man jedoch sog. Befestigungslaschen 2a des flächigen Bauelementes 2, über welche dieses Bauelement 2 mittels nicht dargestellter Schrauben insbesondere am Bodenblech (1) befestigt werden kann.

Die in Fig.2 dargestellten Dämpfungselemente 3 sind etwas anders gestaltet als das i.V.m. Fig.1 beschriebene Dämpfungselement 3, sie sind jedoch in der gleichen Weise und insbesondere ohne weitere Befestigungselemente zwischen der Unterbodenverkleidung bzw. dem flächigen Bauelement 2 und dem Bodenblech 1 eingespannt. Anders gestaltet, nämlich keine nach außen offene Einbuchtung 5b zur Aufnahme einer Kraftstoffleitung 4 aufweisend, sind diese Dämpfungselemente 3 deshalb, weil sie Bauteile tragen, die nicht nur der Führung des Kraftstoffs dienen, sondern die zusätzliche Funktionen wahrnehmen.

So handelt es sich bei dem mit der Bezugsziffer 4a bezeichneten Bauteil um eine Kraftstoffpumpe, während das Bauteil 4b ein Kraftstoff-Filter ist. Dabei sind auf diese Bauteile 4a, 4b die geeignet gestalteten Dämpfungselemente 3 aufgesteckt. Bei diesem Ausführungsbeispiel ist noch ein Teil-Abschnitt der Kraftstoffleitung 4 direkt ohne erfindungsgemäße Dämpfungselemente, dafür mittels einzelner Clip-Elemente 6 am flächigen Bauelement 2 befestigt, weil bezüglich dieses speziellen Teil-Abschnittes der Leitung 4 keine elastische Lagerung erforderlich ist, jedoch könnte auch dieser Leitungsabschnitt wie in Fig.1 dargestellt gelagert sein, wie überhaupt eine Vielzahl weiterer Details insbesondere konstruktiver Art durchaus abweichend von den gezeigten Ausführungsbeispielen gestaltet sein kann, ohne den Inhalt der Patentansprüche zu verlassen.

## Patentansprüche

1. Anordnung zur Halterung zumindest einer als Kraftstoffleitung fungierenden Leitung (4) an einem Kraftfahrzeug, bestehend aus einem die Leitung (4) umgebenden elastischen Dämpfungselement (3), das zwischen einem Bodenblech (1) des Kraftfahrzeugs und einem hiervon beabstandeten flächigen Bauelement (2), welches wesentlich größer als des Dämpfungselement (3) ist, angeordnet ist,
**dadurch gekennzeichnet, dass** das Dämpfungselement (3) zwischen dem Bodenblech (1) und dem flächigen Bauelement (2) eingespannt und ohne weitere Befestigungselemente gehalten ist.

2. Anordnung nach Anspruch 1,
**dadurch gekennzeichnet, dass** das flächige Bauelement (2) zumindest ein weiteres Element, insbesondere ein weiteres Dämpfungselement (3) trägt.

3. Anordnung nach einem der vorangegangenen Ansprüche,
**dadurch gekennzeichnet, dass** ein Bestandteil der Leitung (4) ein neben der Fluid-Führung eine zusätzliche Funktion aufweisendes Bauteil (4a, 4b) ist, und dass dieses Bauteil (4a, 4b) über ein elastisches Dämpfungselement (3) zwischen dem Bodenblech (1) und dem flächigen Bauelement (2) eingespannt ist.

4. Anordnung nach einem der vorangegangenen Ansprüche,
**dadurch gekennzeichnet, dass** das Dämpfungselement (3) in extrutiertem Moosgummi ausgeführt ist.

## Claims

1. An arrangement for holding at least one line (4) acting as a fuel line on a motor vehicle, comprising of an elastic damping element (3) which surrounds the line (4) and is arranged between a floor pan (1) of the motor vehicle and a flat constructional element (2) which is spaced apart therefrom and is substantially larger than the damping element (3), **characterised in that** the damping element (3) is clamped between the floor pan (1) and the flat constructional element (2) and is held without any further fastening elements.

2. An arrangement according to claim 1, **characterised in that** the flat constructional element (2) carries at least one further element, more especially a further damping element (3).

3. An arrangement according to any one of the preceding claims, **characterised in that** a component of the line (4) is a component part (4a, 4b) having an additional function as well as fluid guidance, and **in that** this component part (4a, 4b) is clamped between the floor pan (1) and the flat constructional element (2) via an elastic damping element (3).

4. An arrangement according to any one of the preceding claims, **characterised in that** the damping element (3) is produced in extruded sponge rubber.

## Revendications

1. Dispositif pour maintenir sur un véhicule automobile au moins une conduite (4) qui fait fonction de conduite de carburant, comportant un élément amortisseur (3) élastique qui entoure la conduite (4) et qui est placé entre un panneau (1) du véhicule automobile et un élément structurel (2) plat, à distance de celui-ci et considérablement plus grand que l'élément amortisseur (3),
**caractérisé en ce que**
l'élément amortisseur (3) est encastré entre le panneau (1) et l'élément 10 structurel (2) plat et est maintenu sans élément de fixation supplémentaire.

2. Dispositif selon la revendication 1,
**caractérisé en ce que**
l'élément structurel (2) plat porte au moins un autre élément, en particulier un autre élément amortisseur (3).

3. Dispositif selon l'une des revendications précédentes,
**caractérisé en ce que**
une partie constitutive de la conduite (4) est un composant (4a, 4b) qui, outre la fonction de guider le fluide, a une fonction supplémentaire, et ce composant (4a, 4b) est encastré entre le panneau (1) et l'élément structurel (2) plat par un élément amortisseur (3) élastique.

4. Dispositif selon l'une des revendications précédentes,
**caractérisé en ce que**
l'élément amortisseur (3) est fabriqué en caoutchouc cellulaire extrudé.
